# EUROPEAN PATENT SPECIFICATION

(11) **EP 4 468 497 B1**
(45) Date of publication and mention of the grant of the patent: **01.04.2026**
(21) Application number: 23900973.1
(22) Date of filing: 27.11.2023
(51) Int. Cl.: H01M 50/358, H01M 50/24, H01M 50/264, H01M 50/209, H01M 10/658, H01M 50/342

(54) **BATTERY PACK HAVING COVER-INTEGRATED VENTING DUCT**
BATTERIEPACK MIT ABDECKUNGSINTEGRIERTEM ENTLÜFTUNGSKANAL
BLOC-BATTERIE AYANT UN CONDUIT DE VENTILATION À COUVERCLE INTÉGRÉ

(30) Priority: 06.12.2022 KR 20220168749
(43) Date of publication of application: 27.11.2024
(73) Proprietor: LG Energy Solution, Ltd., Seoul 07335 (KR)
(72) Inventor: YOON, Doo Han, Daejeon 34122 (KR); LEE, Jin Kyu, Daejeon 34122 (KR); SON, Chang Keun, Daejeon 34122 (KR)
(74) Representative: Plasseraud IP
(86) International application number: PCT/KR2023/019191
(87) International publication number: WO 2024/122954

(56) References cited:
- EP-B1- 2 450 982
- WO-A1-2012/133709
- WO-A1-2020/133803
- WO-A1-2022/203278
- JP-A- 2002 134 078
- JP-A- 2012 221 717
- KR-A- 20190 082 974
- KR-A- 20210 029 132
- KR-B1- 101 199 217
- US-A1- 2010 028 758

## Description

### [Technical Field]

The present invention relates to a battery pack having a venting duct integrally formed in an upper cover of a pack case to directs high temperature gases or flames discharged from a venting device provided on the upper surface of prismatic cells aligned in a row to a predetermined discharge direction.

This application claims the benefit of priority based on Korean Patent Application No. 10-2022-0168749, filed on December 6, 2022.

### [Background Technology of the Invention]

Unlike primary batteries, secondary batteries can be recharged, and they have been heavily researched and developed in recent years due to their potential for miniaturization and large capacity. The demand for secondary batteries as an energy source is increasing rapidly due to the technological development and increasing demand for mobile devices, electric vehicles, and energy storage systems, which are emerging in response to the need for environmental protection.

Secondary batteries are categorized into coin-type cells, cylindrical cells, prismatic cells, and pouch-type cells based on the shape of the battery case. In a secondary battery, an electrode assembly mounted inside the battery case is a chargeable/dischargeable power generator consisting of a laminated structure of electrodes and separators.

Secondary batteries take the form of a battery pack, which can be a grouping of a plurality of battery cells. Battery packs increase energy density and can be used in devices that require high energy, such as electric vehicles. A battery pack electrically connects multiple battery cells to output a specified power, cools the battery cells as their temperature rises during operation, and has various safety devices to respond to emergencies such as ignition.

Particularly, since secondary batteries are required to be used continuously for a long period of time, it is necessary to effectively control the heat generated during the charging and discharging process. If the secondary battery is not properly cooled, the increase in temperature causes an increase in current, which causes an increase in temperature, and the increase in current causes the temperature to rise again, triggering a feedback chain reaction that eventually leads to the catastrophic condition of thermal runaway.

Moreover, when secondary batteries are grouped together in the form of modules or packs, the thermal runaway of one secondary battery can cause the thermal propagation phenomenon that continuously overheats other neighboring secondary batteries. Furthermore, there is a high risk of fire due to ignition sources such as flammable gases and heated electrodes emitted from overheated secondary batteries, so it is necessary to suppress the risk of ignition.

In order to prepare for emergencies such as thermal runaway and thermal propagation, secondary batteries are often equipped with a venting device as a safety valve. In the event of an excessive increase in the internal pressure of the secondary battery, the venting device reacts by opening itself to relieve the internal pressure, thereby preventing the structural collapse of the secondary battery.

However, when the venting device is operated, flammable gases and ignition sources such as heated electrodes are ejected in a random direction through the outlet of this pressure relief, so it is necessary to control and guide the direction of the ejection properly. For this purpose, a venting duct is sometimes installed in the module to form an induction passage for the venting device.

Further prior art is described in WO 2012/133709 A1, WO 2020/133803 A1 and JP 2002 134078 A.

### [Description of the Invention]

### [Technical Problem]

The present invention has the object to provide a battery pack that can collectively form an induction passage for a venting device with a simple assembly process for all secondary batteries included in a battery block and battery module comprising the battery pack.

However, the technical problem the present invention aims to solve is not limited to the problems mentioned above, and other problems not mentioned will be apparent to those of ordinary skill in the art from the description of the invention set forth below.

### [Technical Solution]

According to the present invention this object is accomplished by a battery pack comprising the features of claim 1.

Dependent claims are directed on features of preferred embodiments of the invention.

### [Advantageous Effects]

According to the battery pack of the present invention having the above-described configuration, a venting duct compartmentalized for each battery block is installed for all cell arrays simply by mounting a battery block in the pack case and sealing the pack case with an upper cover. Thus, the assembly and disassembly process of the battery pack is simplified since it is not necessary to install a venting duct for each battery block, and since the upper cover acts as a venting duct, the material is reduced, resulting in cost savings.

In addition, the upper cover having an integrally curved venting duct has a curved cross-sectional shape, which improves the mechanical rigidity compared to a conventional upper cover having a simple flat plate shape, and can more effectively protect the battery block inside the pack case.

However, the technical effects obtainable through the present invention are not limited to the effects described above, and other effects not mentioned here will be clearly understood by those skilled in the art from the description of the invention provided below.

### [Brief Description of the Drawings]

The following diagrams accompanying this specification illustrate preferred embodiments of the present invention and, together with the detailed description of the present invention that follows, serve to further illustrate the technical ideas of the present invention, and the present invention is not to be construed as limited to what is shown in such diagrams.
FIG. 1 is a diagram illustrating a battery block according to an exemplary embodiment of the present invention.
FIG. 2 is an exploded perspective view of the battery block of FIG. 1.
FIG. 3 is a diagram illustrating a structure in which the battery block of FIG. 1 is expanded in the width direction to form a battery module.
FIG. 4 is an exploded perspective view of a battery pack of the present invention.
FIG. 5 is a diagram illustrating a battery pack of the present invention.
FIG. 6 is a cross-sectional view of the incision along line "A-A" in FIG. 5.
FIG. 7 is a cross-sectional view of the incision along line "B-B" in FIG. 5.
FIG. 8 is a cross-sectional view of the incision along line "C-C" in FIG. 5.
FIG. 9 is a diagram illustrating another exemplary embodiment of a battery block according to the present invention.
FIG. 10 is a cross-sectional view of the incision along line "D-D" in FIG. 9.
FIG. 11 is a cross-sectional view of the incision along line "E-E" in FIG. 9.

### [Best Mode for Carrying out the Invention]

The present invention is subject to various modifications and can have many embodiments, certain of which are described in detail below.

The terms "comprise" or "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present invention relates to a battery pack, which in one example includes: a battery block including a cell array in which a plurality of prismatic cells provided with a venting device on the upper surface is arranged in a row, a pair of side plates disposed on each of both sides of the cell array, and a pair of end plates disposed on each of front and rear surfaces of the cell array, wherein both ends of the end plates in the width direction are fixed to side brackets provided at both ends of the side plates in the longitudinal direction of the side plates, so that the cell array is constrained as a single block; and a pack case in which a plurality of the battery blocks are mounted.

Here, the upper cover of the pack case is integrally formed with a venting duct forming an integral flow path for a plurality of venting devices arranged in a row on the upper surface of the cell array, and preferably, the venting duct is integrally formed by plastically processing the upper cover.

According to the battery pack of the present invention, a venting duct for every cell array compartmentalized for each battery block is installed by simply mounting the battery block inside the pack case and sealing the pack case with the upper cover.

This simplifies the assembly and disassembly of the battery pack by eliminating the need to install a venting duct for each individual battery block, and reduces the amount of material required as the upper cover acts as a venting duct, resulting in cost savings.

In addition, the upper cover with an integrally curved venting duct has a curved cross-sectional shape, which improves mechanical rigidity compared to a conventional upper cover with a simple flat plate shape, and can more effectively protect the battery block inside the pack case.

### [Mode for Carrying out the Invention]

Specific embodiments of the present invention will now be described in detail with reference to the accompanying drawings. As used in the following description, relative positioning designations such as front to back, up and down, left and right are intended to aid in understanding the invention and refer to the orientation shown in the drawings unless otherwise defined.

### [First embodiment]

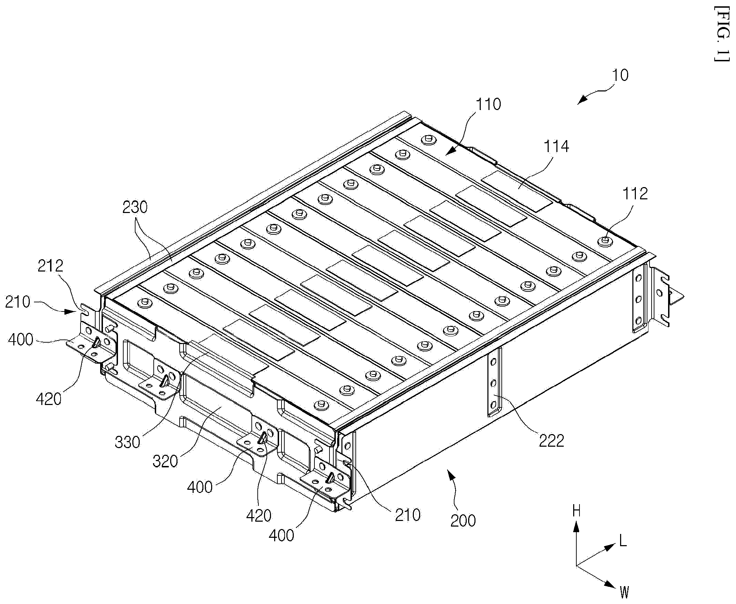

A first embodiment of the present invention briefly describes a battery block 10, and a configuration in which a plurality of battery blocks 10 are connected together to form a single battery module 500. The venting duct 632 provided in the battery pack 600 of the present invention is arranged in parallel, one for each battery block 10 that constrains a single cell array 100 in block form, with the battery blocks 10 described in FIGS. 1 through 3 having a structure suitable for integrally installing a plurality of venting ducts 632.

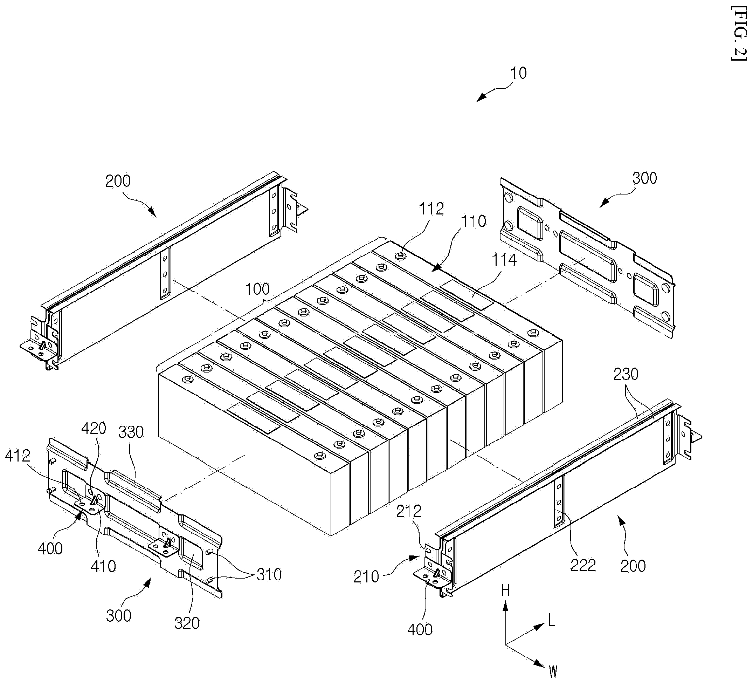

FIG. 1 is a diagram illustrating a battery block 10 according to one embodiment of the present invention, and FIG. 2 is an exploded perspective view of the battery block 10 of FIG. 1. Referring to the accompanying FIGS. 1 and 2, a battery block 10 according to the present invention includes a pair of side plates 200 and a pair of end plates 300 that are coupled thereto to form a parallelepiped-shaped space, and a cell array 100 housed in the parallelepiped space.

The cell array 100 refers to a population of cells comprising a plurality of prismatic cells 110 arranged in a row. Each prismatic cell 110 is a finished prismatic secondary battery capable of being independently charged and discharged, and in the embodiment shown, 12 prismatic cells 110 are shown together to form a single cell array 100. All of the prismatic cells 110 are typically constructed to the same specifications, and the prismatic cells 110 aligned in a row collectively form a parallelepiped shape.

Here, the illustrated prismatic cell 110 corresponds to a unidirectional prismatic cell 110 having both positive and negative electrode terminals 112 disposed on its upper surface, and further having a venting device 114 between the pair of electrode terminals 112. The venting device 114 provided on the upper surface of the plurality of prismatic cells 110 arranged in the cell array 100 is also aligned in a row.

The venting device 114 is a device corresponding to a safety valve that ruptures to relieve the pressure inside the prismatic cell 110 when an exceed level of pressure is applied, and may include, for example, a notched rupture disk made of a thin plate-like member of a metal material. When the pressure inside the sealed prismatic cell 110 rises, the pressure causes tensile strain across the thin plate and tears the weaker notch part to release the pressure inside the prismatic cell 110.

A pair of side plates 200 are disposed on each of both sides of the cell array 100, and a pair of end plates 300 are disposed on each of the front and rear surfaces of the cell array 100. Both ends of the end plate 300 in the width direction W are fixed to side bracket 210 provided at both ends in the longitudinal direction L of the side plate 200, and the interconnection of the end plate 300 and the side plate 200 via the side bracket 210 constrains the cell array 100 as a single block.

Here, the side plate 200 and the end plate 300, and the side bracket 210 connecting them are all made of a thermally conductive material, for example, a metal material with good thermal conductivity, such as aluminum or stainless steel (SUS), through which the side plate 200 and the end plate 300 are thermally connected.

In other words, for any prismatic cell 110 in the cell array 100, the side plate 200 and end plate 300 that contact the cell array 100, as well as other neighboring prismatic cells 110, form a single thermal mass that is thermally connected to each other. In this way, the entire battery block 10 forms a single thermal mass, which provides the basis for a passive cooling structure that not only mitigates the rapid temperature rise of the prismatic cells 110 during charging and discharging, but also quickly disperses heat in the event of an emergency such as thermal runaway, thermal propagation, and the like.

Meanwhile, the upper end of the side plate 200 has a bent upper flange 230 that contacts the upper surface of the cell array 100. The upper flange 230 creates a downward fixing force that presses the cell array 100 to the bottom when the side plate 200 and end plate 300 of the battery block 10 are mounted to the mounting part 640 of the pack case 602.

Referring again to FIGS. 1 and 2, the side bracket 210 provided at both ends of the side plate 200 include fastening grooves 212 that are inserted into a weld bolt 310 protruding from the end plate 300, and the weld bolt 310 and the fastening grooves 212 are bonded to each other by welding.

A weld bolt 310 provided on a pair of end plates 300 disposed on the front and rear surfaces of the cell array 100, respectively, provide a fastening point for the side bracket 210, and fastening grooves 212 are engaged in the weld bolt 310 to primarily align the assembly position of the side plate 200 and end plate 300. For a stable and robust coupling of the side plate 200 and the end plate 300, and for strong constraint to the cell array 100, the weld bolts 310 and the fastening grooves 212 may be provided in an up-down pair relative to the center in the height direction H of the cell array 100.

In addition, the end plate 300 includes an end bracket 400 that is fixed to the pack case 602. Additionally, the side bracket 210 also includes end bracket 400 that is fixed to the pack case 602.

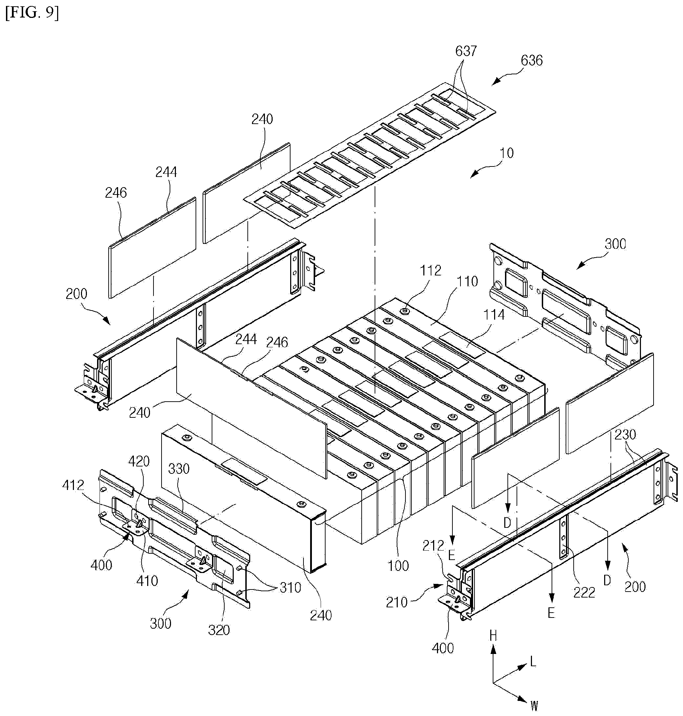

An end bracket 400 provided on the end plate 300 and the side plate 200 has a fastening surface 410 aligned with the width direction W, and one or more fastening holes 412 are formed on the fastening surface 410 of the end bracket 400. The fastening surface 410 of the end bracket 400 is seated on a mounting part 640 provided in the pack case 602 (see FIG. 9), and the battery block 10 is fixed to the pack case 602 by bonding or uniting the end bracket 400 to the mounting part 640 of the pack case 602 via the fastening holes 412.

Further, the end bracket 400 may include reinforcing ribs 420, such as in the form of a right triangle perpendicular to the fastening surface 410, to reinforce rigidity to a load in the height direction. For reference, to reinforce the rigidity of the end plate 300 itself, one or more concave surfaces 320, similar to the concave surface 222 of the side plate 200, may be bent and formed, and the upper end of the end plate 300 may also be provided with an upper flange 330 for stable fixation of the cell array 100.

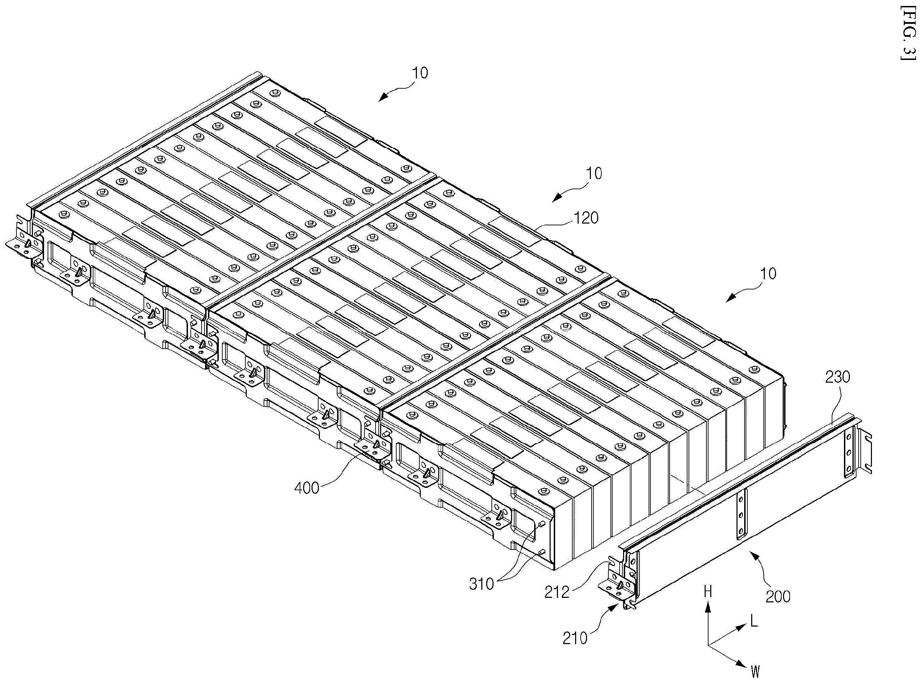

Meanwhile, FIG. 3 is a diagram illustrating a structure in which the battery block 10 extends in the width direction W to form a battery module 500 connected together. The battery block 10 of the present invention is capable of extending any number of cell arrays 100 along the width direction W via the side plate 200 and side bracket 210.

Referring to FIG. 3, the side bracket210 is provided with fastening grooves 212 on both the left and right sides relative to the center in the width direction W of the side plate 200. Thus, for one side plate 200, it is possible to attach one end plate 300 to both sides in the width direction W of the side plate 200.

Another cell array 100 arranged along the width direction W share a single side plate 200 in the center, and a plurality of cell arrays 100 extend along the width direction W by means of a weld bolt 310 provided in a pair of end plates 300 disposed at the front and rear surfaces of another array of cells 100, respectively, fixed to the fastening grooves 212 of the side bracket 210.

In this way, as the side bracket 210 is provided with fastening grooves 212 on both the left and right sides, respectively, it becomes possible to couple one end plate 300 with each side of one side plate 200, and as neighboring cell arrays 100 share one side plate 200, the total number of side plates 200 is only one more than the number of cell arrays 100 in a structure in which a plurality of battery blocks 10 are connected. Thus, the space efficiency of the battery pack 600 mounting the battery block 10 of the present invention is further improved.

### [Second embodiment]

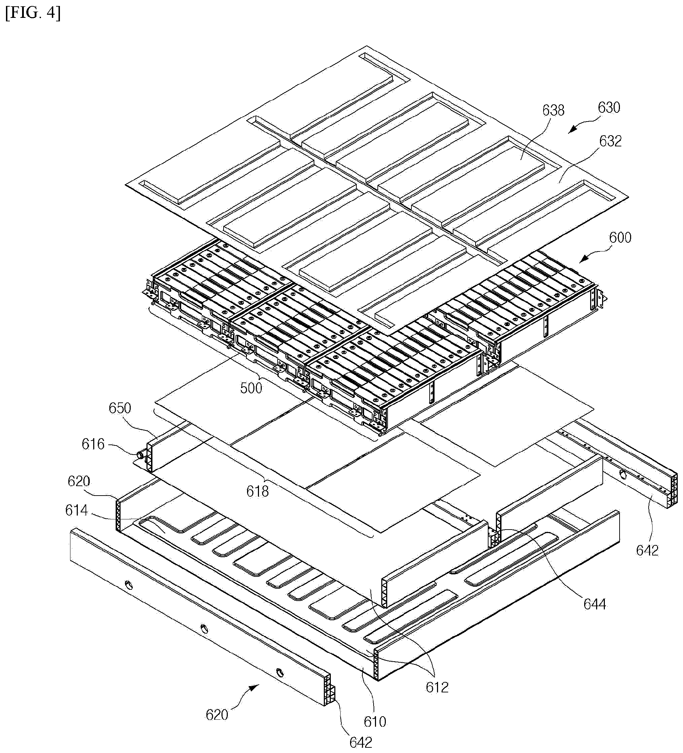

FIG. 4 illustrates a structure in which the battery block 10 extending in the width direction W described in the first embodiment is mounted in a pack case 602.

The pack case 602, in which the plurality of battery blocks 10 is mounted, includes a base plate 610 forming a bottom surface, a side frame 620 forming walls along all sides of the base plate 610, and an upper cover 630 sealing the upper surface of the pack case 602. The pack case 602 shown illustrates an example of two battery modules 500 with the side plate 200 and end plate 300 coupled together in a grid configuration to form a row of three cell arrays 100 (as used herein, an assembly of a plurality of battery blocks connected together via side plates will be referred to as a battery module).

A single battery module 500 with three cell arrays 100 arranged in a row has an end bracket 400 exposed along the end plate 300 at the front and rear surfaces, and one end bracket 400 also exposed on the side bracket 210 between the end plates 300. The pack case 602 is also provided with a rail-like mounting part 640 corresponding to the fastening surface 410 of the end bracket 400 that protrude from the front and rear surfaces of the battery module 500. The mounting part 640 includes a pair of side mounting parts 642 coupled to or integrally formed with the side frame 620, and a center mounting part 644 arranged side by side across the center of the base plate 610.

When the battery module 500 is inserted into the space between the side mounting part 642 and the center mounting part 644, the fastening surface 410 of the end bracket 400 faces the mounting part 640 of the pack case 602, and all of the battery blocks 10 are fixed to the pack case 602 by bonding or uniting the end bracket 400 to the mounting part 640 of the pack case 602 via the fastening holes 412.

And, when the end brackets 400 of each battery block 10 are coupled and fixed to the mounting part 640 of the pack case 602, the side plates 200, and furthermore, the upper flange 330, 230 that is bent and formed on the upper end of the end plate 300 naturally generates a downward fixing force that presses the cell array 100 against the base plate 610, thereby ensuring that the cell array 100 is firmly coupled to the base plate 610.

In the embodiment shown, the base plate 610 includes a heat sink 612 provided with a cooling flow path 614 through which cooling medium flows therein. The heat sink 612 includes a lower plate with the cooling flow path 614 formed therein, and an upper plate that fluidly seals by bonding to the lower plate, the upper plate having a pair of flow adapters 616 that form inlets and outlets for cooling medium to be distributed to the cooling flow path 614.

Further, the contact surface between the heat sink 612 of the base plate 610 and the battery block 10, a thermally conductive thermal interface material (TIM) 618 may be interposed. The thermally conductive thermal interface material 618 refers to an air-permeable material that has a significantly higher thermal conductivity than metallic materials such as aluminum, and the thermally conductive thermal interface material 618 contributes to rapidly transferring heat generated by the battery block 10 to the heat sink 612 with a high thermal conductivity and by acting as a filler to smooth out microscopic irregularities in the contact surface.

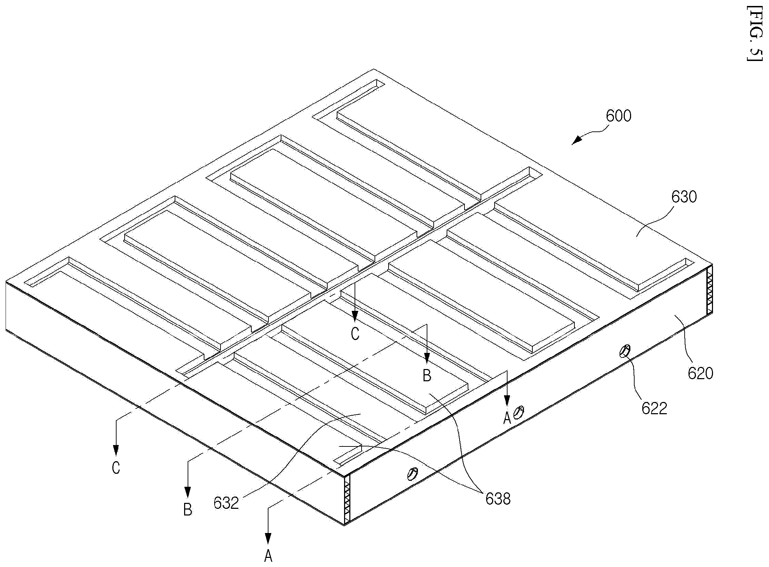

The battery modules 500 mounted within the pack case 602 are sealed by an upper cover 630 that couples to the upper end corner of the side frame 620, as shown in FIG. 5. In particular, the battery pack 600 of the present invention has a venting duct 632 integrally formed with the upper cover 630. The venting duct 632 has a flow path communicating with a plurality of venting devices 114 arranged in a row with the upper surface of the cell array 100.

Preferably, the venting duct 632 is formed integrally with the upper cover 630 by plastic processing, such as press processing. To integrally form the venting duct 632, the upper cover 630 is bent to form a curved cross-sectional shape, which provides the upper cover 630 with increased mechanical rigidity and better protection of the battery block 10 inside the pack case 602 compared to a conventional upper cover that is simply a flat plate.

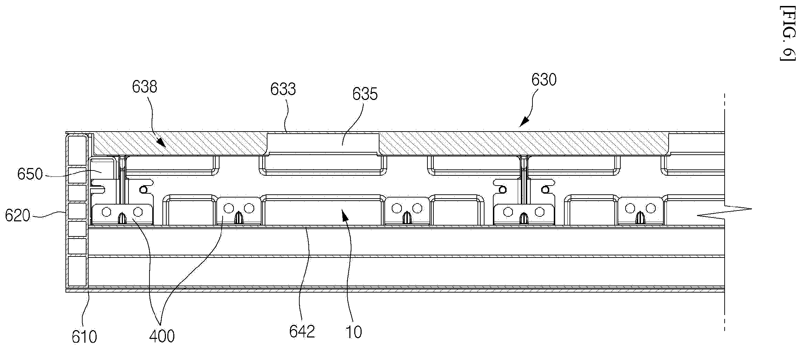

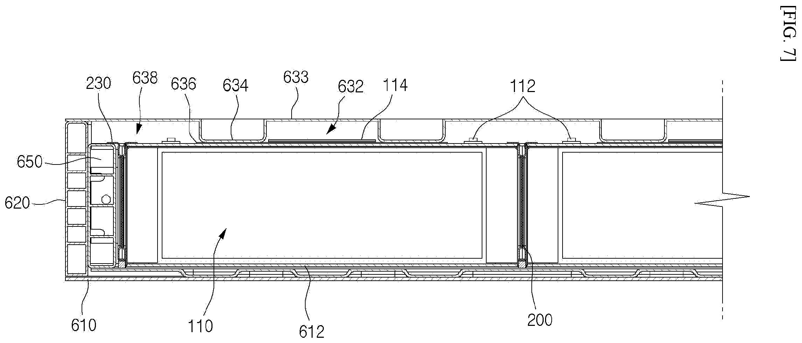

FIGS. 6 through 7 are cross-sectional views of the upper cover 630 cut through to illustrate the cross-sectional structure of the venting duct 632. As shown, the venting duct 632 includes a concave part 634 coupled to the upper surface of the prismatic cell 110 around the venting device 114, and a convex part 633 that forms a space surrounding the venting device 114. Here, the concave part 634 and the convex part 633 are referred to with reference to their relative depth differences when the upper cover 630 is viewed from above, and it can be understood that the plane formed by the surface of the convex part 633 corresponds to a reference surface of the upper cover 630.

The concave parts 634 on either side of the convex part 633 coupled to the upper surface of the prismatic cell 110, thereby isolating the space inside the convex part 633 surrounding the venting device 114 from the outside. Furthermore, the contact surface of the concave part 634 of the venting duct 632 and the upper surface of the prismatic cell 110 may be interposed with a heat-resistant insulating sheet 636, such as a mica sheet, to prevent the venting device 114 from being covered. The insulating sheet 636 thermally protects the contact surface of the concave part 634 and the prismatic cell 110 when high temperature gases, flames, particles, etc. are ejected by the rupture of the venting device 114, and allows the airtightness to be maintained longer.

The flow space inside the convex part 633 formed by the venting duct 632 forms a pathway for the combustion products ejected from the venting device 114 to travel, and each cell array 100 has one venting duct 632. That is, the plurality of prismatic cells 110 comprising the cell array 100 share one venting duct 632, and the venting duct 632 assigned to each cell array 100 is separate from each other. In this way, thermal runaway generated in any one battery block 10 is inhibited from propagating to the surrounding area, thereby preventing or delaying it from spreading to thermal propagation.

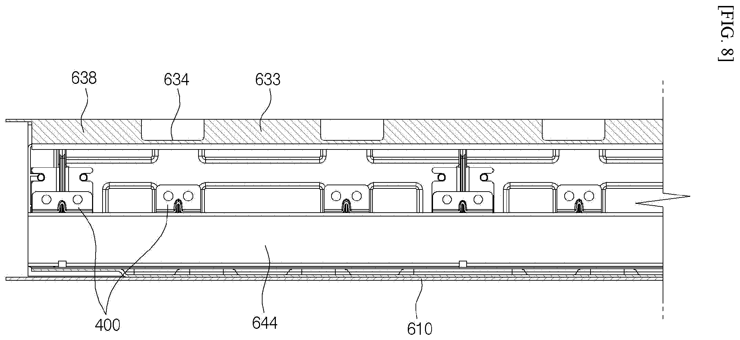

Further, the convex part 633 of the venting duct 632 has one side facing the side frame 620 of the pack case 602 forming a duct outlet 635, while the opposite side forms a closed surface. Referring to FIGS. 6 and 8, one end of the convex part 633 adjacent to the side frame 620 is open, while the other end opposite is closed. Accordingly, combustion products flowing through the venting duct 632 are directed to flow in one direction toward the side frame 620. Furthermore, the duct outlet 635 of the convex part 633 is in communication with the venting outlet 622 provided in the side frame 620 of the pack case 602, so that the combustion products ejected from any battery block 10 follow a predetermined path and finally discharge to the venting outlet 622 of the pack case 602. As such, combustion products from the prismatic cells 110 that have undergone thermal runaway can be discharged to the outside of the pack case 602 via a limited and defined pathway, thereby allowing for efficient safety design of the battery pack 600 as well as the various devices mounting the battery pack 600.

Meanwhile, in the embodiment shown, the upper surface of the prismatic cell 110 has electrode terminals 112 on each side of the venting device 114. Since the electrical wiring between the plurality of prismatic cells 110 comprising the cell array 100 and the battery block 10 originates from the electrode terminals 112, it is necessary to secure the space required for the electrical wiring around the electrode terminals 112. To this end, the upper cover 630 is provided with a wiring duct 638 on either side of the venting duct 632 to form a space surrounding the electrode terminals 112 of the cell array 100, and the wiring duct 638 is preferably formed integrally by plastically processing the upper cover 630.

Here, as shown in FIGS. 6 through 8, it is preferred that the wiring duct 638 is isolated from the entirety of the venting duct 632, including the duct outlet 635. That is, the wiring duct 638 is isolated from the venting duct 632 to protect the electrical wiring from combustion products flowing through the venting duct 632 in the event of a thermal runaway event in which the venting device 114 is activated. In particular, as shown in FIG. 6, one end of the wiring duct 638 adjacent to the side frame 620 is not in line with the outlet cross-section of the duct outlet 635, thereby preventing the electrical wiring within the wiring duct 638 from being exposed to high temperature combustion products discharged through the duct outlet 635.

### [Third embodiment]

FIG. 9 is a diagram illustrating a battery block 10 according to a third embodiment, wherein the battery block 10 in third embodiment is provided with a heat-absorbing/venting pouch 240 as a safety means against various thermal issues. As shown in FIG. 9, the heat-absorbing/venting pouch 240 can be disposed inside the side plate 200 and/or on the front and rear surfaces of the prismatic cell 110.

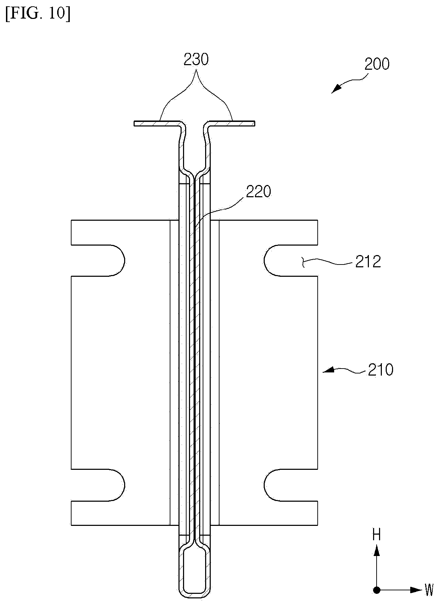

Referring to FIG. 9 and FIG. 10, which is a cross-sectional view cut along line "D-D" in FIG. 9, the side plate 200 shown consists of a single plate bent into a "U" shape with an open upper end to form an internal space. By bending a single plate into a "U" shape with an open upper end, the side plate 200 is lightweight and exhibits good mechanical strength.

In addition, the side plate 200 has concave surfaces 222 on either side of the bent plate, and the facing concave surfaces 222 are bonded to each other to form bonding ribs 220. These bonding ribs 220 are provided at least one along the longitudinal direction L of the side plate 200, and in the embodiment shown, a total of three bonding ribs 220 are formed at each end and in the center of the side plate 200.

A single plate bent in a "U" shape may have excellent durability and strength against compression and tension in the longitudinal direction L due to the bending structure, but may be relatively weak against forces in the height direction H. The bonding ribs 220 improve the rigidity of the side plate 200 to the force in the height direction H by connecting the concave surface 222 on both sides of the side plate 200 together by bonding through welding, riveting, or the like.

By such a structure of the side plate 200, i.e., a single plate structure bent in a "U" shape and a structure of the concave surface 222 bonded to each other, the side plate 200 is lightweight and has strong mechanical rigidity. Accordingly, in the battery block 10 of the present invention, the side plate 200 replaces the configuration of the cross beam conventionally provided in the battery pack 600, and the simplified structure of the battery pack 600 enables the space utilization rate of the battery pack 600 to be improved, further increasing the energy density in the same volume, and reducing the cost.

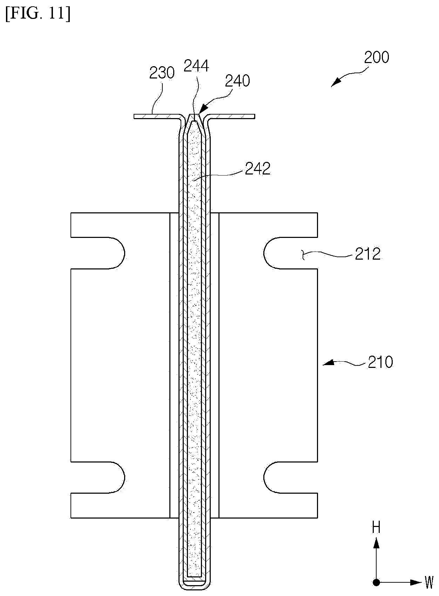

And, as shown in FIG. 9 and in FIG. 11, which is a cross-sectional view cut along line "E-E" in FIG. 9, one or more heat-absorbing/venting pouches 240 are inserted and built in the side plate 200. That is, a narrow, elongated space is provided within the side plate 200 by a pair of concave surfaces 222 that locally form the bonding ribs 220, into which the heat-absorbing/venting pouches 240 are inserted. In the embodiment shown, a total of three bonding ribs 220 are formed at each end and in the center of the side plate 200 to create two compartmentalized spaces, each of which contains a single heat-absorbing/venting pouch 240.

The heat-absorbing/venting pouch 240 seals and stores an absorbent material 242 impregnated with a large amount of liquid, and the liquid impregnated with the absorbent material 242 absorbs the heat of the prismatic cell 110 transferred through the side plate 200. In other words, the heat-absorbing/venting pouch 240 has a heat capacity corresponding to the absorbed heat of the liquid impregnated with the absorbent material 242 and the latent heat that the liquid absorbs as it vaporizes when it exceeds its boiling point. The absorbed heat and latent heat of the liquid adds significant heat capacity to the side plate 200, allowing it to absorb more heat from the prismatic cell 110, further delaying the temperature rise of the prismatic cell 110.

The body of the heat-absorbing/venting pouch 240 may be manufactured using a flexible laminate sheet, which may be a three-or-more layer structure including an aluminum thin film layer, an inner resin layer formed on the inner side of the aluminum thin film layer, and an outer resin layer formed on the outer side of the aluminum thin film layer. For example, the inner resin layer may be unstretched casted polypropylene (CPP) or polypropylene (PP), and the outer resin layer may be polyethylene terephthalate (PET) or nylon.

And, when the liquid impregnated in a large amount in the absorbent material 242 contained in the heat-absorbing/venting pouch 240 absorbs the heat generated by the prismatic cell 110 and its temperature exceeds the boiling point and vaporizes, the rapid increase in volume due to the phase change from liquid to gas causes the heat-absorbing/venting pouch 240, which seals the absorbent material 242, to be under pressure. If the internal pressure exceeds the bursting strength of the heat-absorbing/venting pouch 240, a portion of the heat-absorbing/venting pouch 240 tears, releasing vapor. This discharge(venting) of the vapor allows the high-temperature prismatic cell 110 to cool once again.

Here, the heat-absorbing/venting pouch 240 may be configured such that the vapor that is discharged is appropriately directed so that it performs an effective cooling action. To accomplish this, a portion of the heat-fused sealing part 244 formed along the edge of the heat-absorbing/venting pouch 240 may be provided with a vulnerable part 246. The vulnerable part 246 is configured to preferentially fracture under increased pressure due to vaporization of the liquid by locally reducing the seal strength of the heat-fused sealing part 244. That is, the vulnerable part 246 may be formed in a manner that makes the heat fusion strength of the heat-fused sealing part 244 lower than the surrounding area. For example, the vulnerable part 246 can be made relatively thinner in thickness than the surrounding area or notched to reduce its strength, or it can be formed by locally removing the aluminum thin film layer that maintains the durability of the laminate sheet.

Meanwhile, in a first embodiment of the present invention, the absorbent material 242 may be an absorbent material 242 including a superabsorbent matrix, such as a superabsorbent polymer (SAP) or a superabsorbent fiber (SAF). Superabsorbent matrices can be porous or fibrous, capable of absorbing large amounts of liquid by exhibiting capillary action, while superabsorbent fibers can be manufactured in the form of fibers, such as nonwoven fabrics, by processing superabsorbent resins. The superabsorbent matrix can significantly increase the heat capacity of the side plate 200 as it can hold a large amount of liquid.

The specific types of superabsorbent resins and superabsorbent fibers made therefrom are not particularly limited in the present invention, but can be used without limitation as long as they have a high absorption capacity for fluids, in particular water. Examples of superabsorbent resins in the present invention include one or more selected from the group consisting of polyacrylic acid, polyacrylate, polyacrylate graft polymers, starch, cross-linked carboxymethylated cellulose, acrylic acid copolymers, hydrolyzed starch-acrylonitrile graft copolymers, starch-acrylic acid graft copolymers, saponified vinyl acetate-acrylic acid ester copolymer, hydrolyzed acrylonitrile copolymer, hydrolyzed acrylamide copolymer, ethylene-maleic anhydride copolymer, isobutylene-maleic anhydride copolymer, polyvinylsulfonic acid, polyvinylphosphonic acid, polyvinyl phosphoric acid, polyvinyl sulfonic acid, sulfonated polystyrene, polyvinylamine, polydialkylaminoalkyl (meth)acrylamide, polyethyleneimine, polyarylamine, polyarylguanidine, polydimethyldialylammonium hydroxide, quaternized polystyrene derivatives, guanidine-modified polystyrene, quaternized poly(meth)acrylamide, polyvinylguanidine and mixtures thereof, preferably crosslinked polyacrylic acid salts, crosslinked polyacrylic acid, and crosslinked acrylic acid copolymers, but it is not limited thereto.

The type of acrylic acid copolymer used as a superabsorbent resin in the present invention is not particularly limited, but may preferably be a copolymer including one or more comonomers selected from the group consisting of acrylic acid monomer and maleic acid, itaconic acid, acrylamide, 2-acrylamide-2-methylpropanesulfonic acid, 2-(meth)acryloylethanesulfonic acid, 2-hydroxyethyl(meth)acrylate, and styrenesulfonic acid.

In the present invention, the superabsorbent resin may have an absorption capacity for water of 10 g/g to 500 g/g, preferably 50 g/g to 200 g/g, but is not limited thereto. That is, each gram of the superabsorbent resin may absorb 10 g to 500 g of water, preferably 50 g to 200 g of water.

In the present invention, the greater the amount of water absorption of the superabsorbent resin, the better the duration of the cooling effect, but when the amount exceeds 500 g/g, the fluidity of the superabsorbent resin increases and it is difficult to maintain its shape, so that effective cooling cannot be exerted, and when the amount is less than 10 g/g, the duration of the cooling effect is too short to be effective.

And, in a first embodiment of the present invention, the liquid impregnated in the absorbent material 242 may be water. Water has the largest specific heat and latent heat of any readily available liquid. Therefore, water impregnated in the absorbent material 242 is suitable for application in the heat-absorbing/venting pouch 240 of the present invention because it absorbs a large amount of heat during its phase change to a gas, beginning even before it is vaporized.

Additionally, as shown in FIG. 9, the heat-absorbing/venting pouches 240 may be disposed between the prismatic cells 110 to contact the front and rear surfaces of a plurality of prismatic cells 110 comprising the cell array 100, and also on the front or rear surface of the outermost prismatic cell 110 (hereinafter referred to as "between the prismatic cells" for simplicity). The front and rear surfaces of the prismatic cells 110 may be contacted by the heat-absorbing/venting pouches 240 to more directly absorb heat from the prismatic cells 110, thereby more effectively compensating for thermal issues in the battery block 10.

The configuration of the heat-absorbing/venting pouch 240 disposed between the prismatic cells 110 follows the same as described above, except that the location of the vulnerable part 246 on the heat-fused sealing part 244 can be limited to the upper end edge. By disposing the vulnerable part 246 at the upper end edge of the heat-absorbing/venting pouch 240, in the event of a rupture of the vulnerable part 246, vapor can be ejected into the convex part 633 of the venting duct 632, and contact with the vapor can significantly reduce the risk of ignition or fire by reducing the temperature of the high temperature combustion products below their combustion point.

And, correspondingly, the insulating sheet 636 may have a venting slit 637 penetrated at a location corresponding to the vulnerable part 246 of the heat-absorbing/venting pouch 240. The venting slit 637 is intended to provide a flow path for vapor ejected through the vulnerable part 246, and for effective cooling of the combustion products, the vulnerable part 246 and the corresponding venting slit 637 need to be located within the flow space formed by the convex part 633 of the venting duct 632.

The present invention has been described in more detail above with reference to the drawings and embodiments. However, it is to be understood that the configurations shown in the drawings or embodiments described herein are only one embodiment of the invention and do not represent all of the technical ideas of the present invention.

**[Reference numerals]**

| | | | |
|---|---|---|---|
| 10: | BATTERY BLOCK | 100: | CELL ARRAY |
| 110: | PRISMATIC CELL | 112: | ELECTRODE TERMINAL |
| 114: | VENTING DEVICE | 200: | SIDE PLATE |
| 210: | SIDE BRACKET | 212: | FASTENING GROOVE |
| 220: | BONDING RIB | 222: | CONCAVE SURFACE |
| 230: | UPPER FLANGE POUCH | 240: | HEAT-ABSORBING/VENTING |
| 242: | ABSORBENT MATERIAL | 244: | HEAT-FUSED SEALING PART |
| 246: | VULNERABLE PART | 300: | END PLATE |
| 310: | WELD BOLT | 320: | CONCAVE SURFACE |
| 330: | UPPER FLANGE | 400: | END BRACKET |
| 410: | FASTENING SURFACE | 412: | FASTENING HOLE |
| 420: | REINFORCING RIB | 500: | BATTERY MODULE |
| 600: | BATTERY PACK | 602: | PACK CASE |
| 610: | BASE PLATE | 612: | HEAT SINK |
| 614: | COOLING FLOW PATH | 616: | FLOW ADAPTER |
| 618: | THERMALLY CONDUCTIVE THERMAL INTERFACE MATERIAL | | |
| 620: | SIDE FRAME | | |
| 622: | VENTING OUTLET | 630: | UPPER COVER |
| 632: | VENTING DUCT | 633: | CONVEX PART |
| 634: | CONCAVE PART | 635: | DUCT OUTLET |
| 636: | INSULATING SHEET | 637: | VENTING SLIT |
| 638: | WIRING DUCT | 640: | MOUNTING PART |
| 642: | SIDE MOUNTING PART | 644: | CENTER MOUNTING PART |
| 650: | FLANGE MOUNTING PART | W: | WIDTH DIRECTION |
| L: | LONGITUDINAL DIRECTION | H: | HEIGHT DIRECTION |

## Claims

1. A battery pack (600) comprising:
a plurality of battery blocks (10) each including a cell array (100) in which a plurality of prismatic cells (110) each having a venting device (114) on an upper surface thereof is arranged in a row, a pair of side plates (200) disposed on opposite sides of the cell array (100), and a pair of end plates (300) disposed on front and rear surfaces of the cell array (100), wherein opposite ends of the end plates (300) in a width direction are fixed to side brackets (210) at opposite ends of the side plates (200) in a longitudinal direction of the side plates (200), so that the cell array (100) is constrained as a single block; and
a pack case (602) in which the plurality of the battery blocks (10) is mounted, the pack case (602) having an upper cover (630) integrally formed with a venting duct (632) having a flow path communicating with a plurality of the venting devices (114) arranged in a row along an upper surface of the cell array (100),
**characterized in that** the venting duct (632) is integrally formed by plastically processing the upper cover (630),
wherein the venting duct (632) comprises a concave part (634) coupled to the upper surface of each prismatic cell (110) around the respective venting device (114), and a convex part (633) that forms a space surrounding the respective venting device (110),
wherein the convex part (633) of the venting duct (632) forms a duct outlet (635) on a first side facing a side frame of the pack case (602), and a second side of the convex part (633) opposite the first side forms a closed surface,
wherein the duct outlet (635) communicates with a venting outlet (622) disposed in the side frame (620) of the pack case (602).

2. The battery pack (600) of claim 1, wherein a contact surface of the concave part (634) of the venting duct (632) and the upper surface of each prismatic cell (110) have a respective insulating sheet (636).

3. The battery pack (600) of claim 1, wherein each prismatic cell (110) has electrode terminals (112) disposed at first and second opposite sides of the venting device (114) on the upper surface of the prismatic cell (110), and the upper cover (630) of the pack case (602) has a wiring duct (638) forming a space surrounding the electrode terminals (112) on each side of the venting duct (632), the wiring duct (638) being integrally formed by plastically processing the upper cover (630).

4. The battery pack (600) of claim 3, wherein the wiring duct (638) is not in communication with the duct outlet (635).

5. The battery pack (600) of claim 2, wherein each cell array (100) comprises a heat-absorbing/venting pouch (240) disposed between adjacent ones of the prismatic cells (110) and contacting front and rear surfaces of the adjacent ones of the prismatic cells (110), the heat-absorbing/venting pouch (240) seals and stores a liquid-impregnated absorbent material (242) therein, the heat-absorbing/venting pouch (240) has a heat-fused sealing part (244) along an edge thereof, and the heat-fused sealing part (244) has a vulnerable part (246) formed in a manner that makes the heat fusion strength of the heat-fused sealing part (244) lower than the surrounding area, and having a relatively low bursting strength.

6. The battery pack (600) of claim 5, wherein the vulnerable part (246) of each heat-absorbing/venting pouch (240) is disposed at an upper end edge thereof, and each insulating sheet (636) has a venting slit (637) aligned with the vulnerable part (246) in a space formed by the convex part (633) of the venting duct (632).

7. The battery pack (600) of claim 2, wherein each side plate (200) is made from a single plate bent in a "U" shape with an open upper end to form an internal space, and a heat-absorbing/venting pouch (240) sealing and storing an absorbent (242) impregnated with liquid is disposed in the internal space.

8. The battery pack (600) of claim 7, wherein each side plate (200) has a concave surface (222) on opposite sides of the single plate, each side plate (200) has at least one bonding rib (220) extending along the longitudinal direction (L), the concave surfaces (222) of each side plate (200) facing each other and bonded to each other by the bonding rib (220), and the internal space is bounded by the bonding rib (220).

## Patentansprüche

1. Batteriepack (600), umfassend:
eine Mehrzahl von Batterieblöcken (10), welche jeweils eine Zellenanordnung (100), in welcher eine Mehrzahl von prismatischen Zellen (110), welche jeweils eine Entlüftungsvorrichtung (114) an einer obere Fläche davon aufweisen, in einer Reihe angeordnet ist, ein Paar von Seitenplatten (200), welche an entgegengesetzten Seiten der Zellenanordnung (100) angeordnet sind, und ein Paar von Endplatten (300) umfassen, welche an einer vorderen und einer hinteren Fläche der Zellenanordnung (100) angeordnet sind, wobei entgegengesetzte Enden der Endplatten (300) in einer Breitenrichtung an Seitenklammern (210) an entgegengesetzten Enden der Seitenplatten (200) in einer longitudinalen Richtung der Seitenplatten (200) fixiert sind, sodass die Zellenanordnung (100) als ein einzelner Block beschränkt ist; und
ein Packgehäuse (602), in welchem die Mehrzahl von Batterieblöcken (10) montiert ist, wobei das Packgehäuse (602) eine obere Abdeckung (630) aufweist, welche integral mit einem Entlüftungskanal (632) gebildet ist, welcher einen Strömungspfad aufweist, welcher mit einer Mehrzahl der Entlüftungsvorrichtungen (114) kommuniziert, welche in einer Reihe entlang einer oberen Fläche der Zellenanordnung (100) angeordnet sind,
**dadurch gekennzeichnet, dass** der Entlüftungskanal (632) integral durch eine plastische Verarbeitung der oberen Abdeckung (630) gebildet ist,
wobei der Entlüftungskanal (632) einen konkaven Teil (634) umfasst, welcher mit der oberen Fläche jeder prismatischen Zelle (110) um die entsprechende Entlüftungsvorrichtung (114) gekoppelt ist, und ein konvexer Teil (633), welcher einen Raum bildet, welcher die jeweilige Entlüftungsvorrichtung (110) umgibt,
wobei der konvexe Teil (633) des Entlüftungskanals (632) einen Kanalauslass (635) an einer ersten Seite bildet, welche einem Seitenrahmen des Packgehäuses (602) zugewandt ist, und eine zweite Seite des konvexen Teils (633), welche entgegengesetzt zu der ersten Seite liegt, eine geschlossene Fläche bildet,
wobei der Kanalauslass (635) mit einem Entlüftungsauslass (622) kommuniziert, welcher in dem Seitenrahmen (620) des Packgehäuses (602) angeordnet ist.

2. Batteriepack (600) nach Anspruch 1, wobei eine Kontaktfläche des konkaven Teils (634) des Entlüftungskanals (632) und die obere Fläche einer prismatischen Zelle (110) eine jeweilig Isolationsschicht (636) aufweisen.

3. Batteriepack (600) nach Anspruch 1, wobei jede prismatische Zelle (110) Elektrodenanschlüsse (112) aufweist, welche an einer ersten und einer zweiten entgegengesetzten Seite der Entlüftungsvorrichtung (114) an der oberen Fläche der prismatischen Zelle (110) angeordnet sind, und die obere Abdeckung (630) des Packgehäuses (602) einen Verdrahtungskanal (638) aufweist, welcher einen Raum bildet, welcher die Elektrodenanschlüsse (112) an jeder Seite des Entlüftungskanals (632) umgibt, wobei der Verdrahtungskanal (638) integral durch eine plastische Verarbeitung der oberen Abdeckung (630) gebildet ist.

4. Batteriepack (600) nach Anspruch 3, wobei der Verdrahtungskanal (638) nicht in Kommunikation mit dem Kanalauslass (635) steht.

5. Batteriepack (600) nach Anspruch 2, wobei jede Zellenanordnung (100) einen wärmeabsorbierenden/entlüftenden Beutel (240) umfasst, welcher zwischen Benachbarten der prismatischen Zellen (110) und kontaktierenden vorderen und hinteren Flächen der Benachbarten der prismatischen Zellen (110) angeordnet ist, wobei der wärmeabsorbierende/entlüftende Beutel (240) ein flüssigkeitsimprägniertes Absorptionsmaterial (242) darin abdichtet und speichert, wobei der wärmeabsorbierende/entlüftende Beutel (240) einen wärmeverschweißten Abdichtungsteil (244) entlang eines Randes davon aufweist, und der wärmeverschweißte Abdichtungsteil (244) einen Schwachstellenteil (246) aufweist, welcher in einer derartigen Weise gebildet ist, dass die Wärmeschweißfestigkeit des wärmeverschweißten Abdichtungsteils (244) geringer ist als der umgebende Bereich, und eine relativ geringe Berstfestigkeit aufweist.

6. Batteriepack (600) nach Anspruch 5, wobei der Schwachstellenteil (246) jedes wärmeabsorbierenden/entlüftenden Beutels (240) an einem oberen Rand davon angeordnet ist, und jede Isolationsschicht (636) einen Entlüftungsschlitz (637) aufweist, welcher mit dem Schwachstellenteil (246) in einem Raum ausgerichtet ist, welcher durch den konvexen Teil (633) des Entlüftungskanals (632) gebildet ist.

7. Batteriepack (600) nach Anspruch 2, wobei jede Seitenplatte (200) aus einer einzelnen Platte hergestellt ist, welche in eine "U"-Form gebogen ist, mit einem offenen oberen Ende, um einen inneren Raum zu bilden, und wobei ein wärmeabsorbierender/entlüftender Beutel (240), welcher einen Absorber (242), welcher mit einer Flüssigkeit imprägniert ist, abdichtet und speichert, in dem inneren Raum angeordnet ist.

8. Batteriepack (600) nach Anspruch 7, wobei jede Seitenplatte (200) eine konkave Fläche (222) an entgegengesetzten Seiten der einzelnen Platte aufweist, wobei jede Seitenplatte (200) wenigstens eine Verbindungsrippe (220) aufweist, welche sich entlang der longitudinalen Richtung (L) erstreckt, wobei die konkaven Flächen (222) jeder Seitenplatte (200) einander zugewandt sind und durch die Verbindungsrippe (220) miteinander verbunden sind, und wobei der innere Raum durch die Verbindungsrippe (220) verbunden ist.

## Revendications

1. Bloc-batterie (600) comprenant :
une pluralité de blocs de batterie (10) comportant chacun un réseau de cellules (100) dans lequel une pluralité de cellules prismatiques (110) présentant chacune un dispositif d'aération (114) sur une surface supérieure de celle-ci est agencée en rangée, une paire de plaques latérales (200) disposées sur des côtés opposés du réseau de cellules (100), et une paire de plaques d'extrémité (300) disposées sur des surfaces avant et arrière du réseau de cellules (100), dans lequel des extrémités opposées des plaques d'extrémité (300) dans une direction de largeur sont fixées à des supports latéraux (210) à des extrémités opposées des plaques latérales (200) dans une direction longitudinale des plaques latérales (200), de sorte que le réseau de cellules (100) soit contraint comme un seul bloc ; et
un boîtier de bloc-batterie (602) dans lequel la pluralité de blocs de batterie (10) est montée, le boîtier de bloc-batterie (602) présentant un couvercle supérieur (630) formé d'un seul tenant avec un conduit d'aération (632) présentant un trajet d'écoulement communiquant avec une pluralité de dispositifs d'aération (114) agencés en rangée le long d'une surface supérieure du réseau de cellules (100),
**caractérisé en ce que** le conduit d'aération (632) est formé d'un seul tenant par traitement plastique du couvercle supérieur (630),
dans lequel le conduit d'aération (632) comprend une partie concave (634) couplée à la surface supérieure de chaque cellule prismatique (110) autour du dispositif d'aération (114) respectif, et une partie convexe (633) qui forme un espace entourant le dispositif d'aération (110) respectif,
dans lequel la partie convexe (633) du conduit d'aération (632) forme une sortie de conduit (635) sur un premier côté faisant face à un cadre latéral du boîtier de bloc-batterie (602), et un deuxième côté de la partie convexe (633) opposé au premier côté forme une surface fermée,
dans lequel la sortie de conduit (635) communique avec une sortie d'aération (622) disposée dans le cadre latéral (620) du boîtier de bloc-batterie (602).

2. Bloc-batterie (600) selon la revendication 1, dans lequel une surface de contact de la partie concave (634) du conduit d'aération (632) et la surface supérieure de chaque cellule prismatique (110) présentent une feuille isolante (636) respective.

3. Bloc-batterie (600) selon la revendication 1, dans lequel chaque cellule prismatique (110) présente des bornes d'électrode (112) disposées sur les premier et deuxième côtés opposés du dispositif d'aération (114) sur la surface supérieure de la cellule prismatique (110), et le couvercle supérieur (630) du boîtier de bloc-batterie (602) présente un conduit de câblage (638) formant un espace entourant les bornes d'électrode (112) de chaque côté du conduit d'aération (632), le conduit de câblage (638) étant formé d'un seul tenant par traitement plastique du couvercle supérieur (630).

4. Bloc-batterie (600) selon la revendication 3, dans lequel le conduit de câblage (638) n'est pas en communication avec la sortie de conduit (635).

5. Bloc-batterie (600) selon la revendication 2, dans lequel chaque réseau de cellules (100) comprend une poche d'absorption de chaleur/d'aération (240) disposée entre des cellules adjacentes parmi les cellules prismatiques (110) et en contact avec les surfaces avant et arrière des cellules adjacentes parmi les cellules prismatiques (110), la poche d'absorption de chaleur/d'aération (240) renferme et stocke un matériau absorbant imprégné de liquide (242) en son sein, la poche d'absorption de chaleur/d'aération (240) présente une partie d'étanchéité thermofondue (244) le long d'un bord de celle-ci, et la partie d'étanchéité thermofondue (244) présente une partie vulnérable (246) formée de manière à ce que la résistance à la fusion thermique de la partie d'étanchéité thermofondue (244) soit inférieure à la zone environnante, et présentant une résistance à l'éclatement relativement faible.

6. Bloc-batterie (600) selon la revendication 5, dans lequel la partie vulnérable (246) de chaque poche d'absorption de chaleur/d'aération (240) est disposée sur un bord d'extrémité supérieur de celle-ci, et chaque feuille isolante (636) présente une fente d'aération (637) alignée avec la partie vulnérable (246) dans un espace formé par la partie convexe (633) du conduit d'aération (632).

7. Bloc-batterie (600) selon la revendication 2, dans lequel chaque plaque latérale (200) est fabriquée à partir d'une plaque simple courbée en forme de « U » avec une extrémité supérieure ouverte pour former un espace interne, et une poche d'absorption de chaleur/d'aération (240) renfermant et stockant un absorbant imprégné de liquide (242) est disposée dans l'espace interne.

8. Bloc-batterie (600) selon la revendication 7, dans lequel chaque plaque latérale (200) présente une surface concave (222) sur des côtés opposés de la plaque simple, chaque plaque latérale (200) présente au moins une nervure de liaison (220) s'étendant le long de la direction longitudinale (L), les surfaces concaves (222) de chaque plaque latérale (200) se faisant face et étant reliées entre elles par la nervure de liaison (220), et l'espace interne est délimité par la nervure de liaison (220).
